# EUROPEAN PATENT SPECIFICATION

(11) **EP 2 525 678 B1**
(45) Date of publication and mention of the grant of the patent: **30.10.2019**
(21) Application number: 11733536.4
(22) Date of filing: 18.01.2011
(51) Int. Cl.: A43B 13/38

(54) **IMPROVED MOLDING METHOD**
VERBESSERTES FORMUNGSVERFAHREN
PROCÉDÉ DE MOULAGE PERFECTIONNÉ

(30) Priority: 18.01.2010 US 295854 P
(43) Date of publication of application: 28.11.2012
(73) Proprietor: Polyworks, Inc., North Smithfield, RI 02896 (US)
(72) Inventor: FOX, Richard B., Smithfield, RI 02917 (US); GAUDET, James E., Blackstone, MA 01509 (US)
(74) Representative: Ellis, Michael James
(86) International application number: PCT/US2011/021556
(87) International publication number: WO 2011/088461

(56) References cited:
- US-A- 2 956 313
- US-A- 4 910 886
- US-A- 4 910 886
- US-A- 5 370 518
- US-A- 5 562 147
- US-A1- 2008 034 614
- US-A1- 2008 034 614
- US-A1- 2009 255 625
- US-A1- 2009 255 625

## Description

### TECHNICAL FIELD

The present disclosure relates to systems and methods of molding materials and articles formed thereby. A known method is disclosed in US 2008/0034614 A1.

### RELATED ART

Many different types of products benefit from the inclusion of a material that provides cushioning for, among other things, impact and vibration dampening, resistance to compression, deflection, friction reduction, and the like. For objects with non-planar and/or complex shapes, it can be difficult to tailor the shape of the cushioning material to conform to the shape of the object.

In addition, many frequently used objects comprise materials that are hard to the human touch and/or result in friction when disposed against a human body, especially in repetitive motions. For example, many frequently used objects comprise materials that are hard to the human touch and/or result in friction when disposed against a human body, especially in repetitive motions. It is generally thought desirable to make the body contacting regions of such objects as soft as possible in order to make their use more comfortable for a user e.g., by reducing pressure and/or friction. "Body contacting," as used herein, means contacting a user's skin and/or clothing. Many attempts have been made to make such objects or the body contacting regions of such objects more comfortable for a user.

A need exists in the art for improved methods of making polymeric articles.

### SUMMARY

The present disclosure is directed to a method of molding according to claim 1.

The present disclosure is also directed to a system for facilitating the foregoing method, and others, as well as to the articles molded thereby.

### DRAWINGS

Advantages, novel features, and uses of the disclosure will become more apparent from the following detailed description of non-limiting embodiments of the disclosure when considered in conjunction with the accompanying drawings, which are schematic and which are not intended to be drawn to scale. In the figures, each identical or substantially similar component that is illustrated in various figures is typically represented by a single numeral or notation. For purposes of clarity, not every component is labeled in every figure, nor is every component of each embodiment of the disclosure shown where illustration is not necessary to allow those of ordinary skill in the art to understand the disclosure. In the drawings:
Figure 1 is an expanded partial perspective view of a molding system according to the present disclosure, showing a molding station and a moveable mold support assembly in a first position "X," proximate to the body of the molding machine;
Figure 2 is an expanded partial perspective view of the molding system of Figure 1, showing the movable mold support system in a second position "Y," distal to the body of the molding machine, positioned underneath the dispensing head of a material mixing and dispensing system;
Figure 3 is an expanded partial perspective view of the molding system of Figure 1, showing the movable mold support system returned to the first position, and with the upper and lower plates in a closed position;
Figure 4 is a schematic of the material mixing and dispensing system that forms part of the molding system;
Figure 5 is a top view an exemplary mold base that can be used in the method according to the present disclosure, which is constructed to mold two (2) rectangular straps;
Figure 6 is a cross-sectional schematic view of the mold base shown in Figure 5, through line 6-6, showing the molds for the two straps in cross-section;
Figure 7 is a cross-sectional schematic view of a section of the mold base, with radiused edges "R," and mold cover, showing the application of a barrier layer to the mold base, and a stabilization layer to the mold cover;
Figure 8 is a cross-sectional schematic view of the mold shown in Figure 7, showing the application of a precursor to the barrier layer, and an initial mold closure;
Figure 9 is a cross-sectional schematic view of the mold shown in Figure 8, showing further mold closure and the advancement of the precursor between the mold base and mold cover;
Figure 10 is a cross-sectional schematic view of the mold shown in Figure 9, showing the barrier layer and precursor being drawn into the mold cavities, without creating air bubbles or pockets;
Figure 11 is a cross-sectional schematic view of the mold shown in Figure 10, showing the barrier layer drawn into contact with the mold cavities, and the precursor in contact with the barrier layer, without the presence of air bubbles;
Figure 12 shows the mold after closure and the polymerization of the precursor;
Figure 13 shows a cross-sectional side view of a portion of a sheet containing the interconnected straps, after removal from the mold and before die cutting along the phantom lines;
Figure 14 shows a cross-sectional side view of the strap shown in Figure 13, after die cutting to remove the portions of material interconnecting the straps;

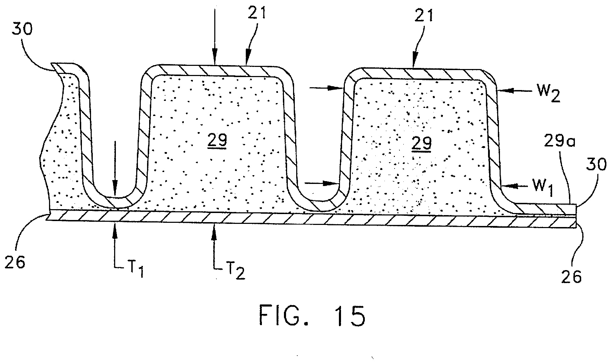

Figure 15 is an expanded view of a portion of the strap shown in Figure 14, showing the edge portion of the strap;

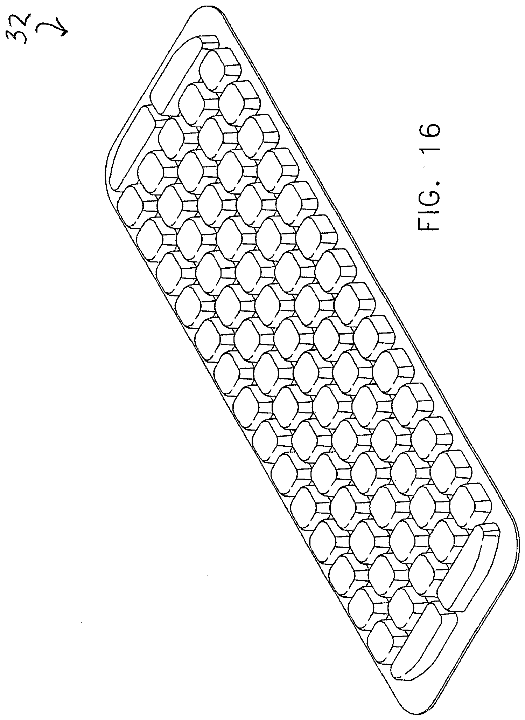

Figure 16 is a top perspective view of the strap shown in Figure 15;
Figure 17 is a cross-sectional view of a mold section comprising mold cavities on the mold surface of both the mold base and the mold cover, for molding articles with non-planar opposing surfaces; and

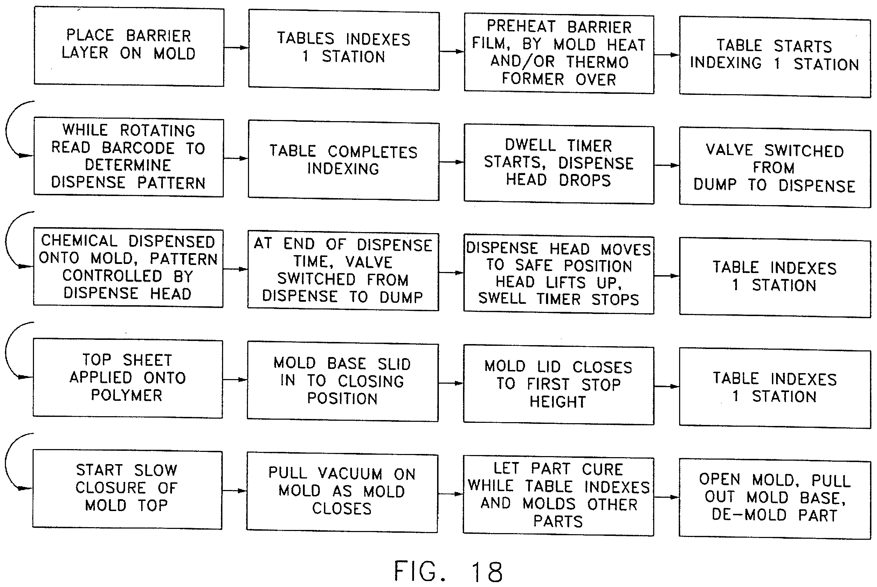

Figure 18 is a flow chart showing one exemplary sequence used for molding products according to the present disclosure.

### DETAILED DESCRIPTION

The present disclosure is directed to a system and method for molding various types of materials, and the articles made thereby. The system and method are useful for continuously molding materials that are known to be difficult to mold, particularly in a continuous process, such as frothed foams. The system and method are also useful for molding relatively low viscosity or low durometer polymeric materials such as polymeric gel materials, in particular, viscoelastic polymeric materials (hereinafter referred to as "gel"). Gels having relatively low durometers, such as viscoelastic gels, can be extremely tacky, making them difficult or impossible to use in commercial process techniques such as injection molding, because the materials can adhere to the molds. It should be understood that the present system and method is not limited to the foregoing materials, and that other materials can be molded with the present system and method (e.g., unfoamed plastic, composite materials, and the like).

In addition to overcoming difficulties associated with the continuous molding of frothed foams, and of tacky gel materials, the present system and method advantageously facilitate the molding of very thick products (e.g., with a thickness of up to about three (3) inches, or more) from the foregoing gel and/or frothed foam materials, including products that comprise a plurality of very thick "pillars" (e.g., with a thickness of up to about three (3) inches, or more) with spacer regions between the pillars as narrow as about two thousandths of an inch (0.002"), and spacer region thicknesses as low as about 0.005". Again, it should be understood that other materials can be molded with the present system and method.

The present system and method involve compression molding a polymer into a desired shape, at a sufficiently slow and/or staggered rate so as to avoid the formation of bubbles at the edges and/or corners of the mold, to provide a relatively thick, uniform pre-form of polymer in the mold, substantially free of air bubbles. The structure of the mold also facilitates the elimination or reduction of such defects, as a result of radiused edges, as will be discussed in greater detail below. By closing the mold cover at a selected rate, and including one or more delays in the mold closing, the turbulent flow over the corners of the mold is substantially reduced or eliminated, which in turn substantially reduces or eliminates the formation of bubbles at the corners, which are defects that result in poor product performance and visual defects.

The system, method and molds can be used to form sheets of material that comprise the foregoing spaced apart pillars, which can be cut to conform to the shape of an existing product. Alternatively, the method can be used to mold a variety of commodity products, such as innersoles, seat pads, etc., that comprise the foregoing spaced apart pillars. Materials and methods for making such materials are described in the '266 and '174 applications referred to above.

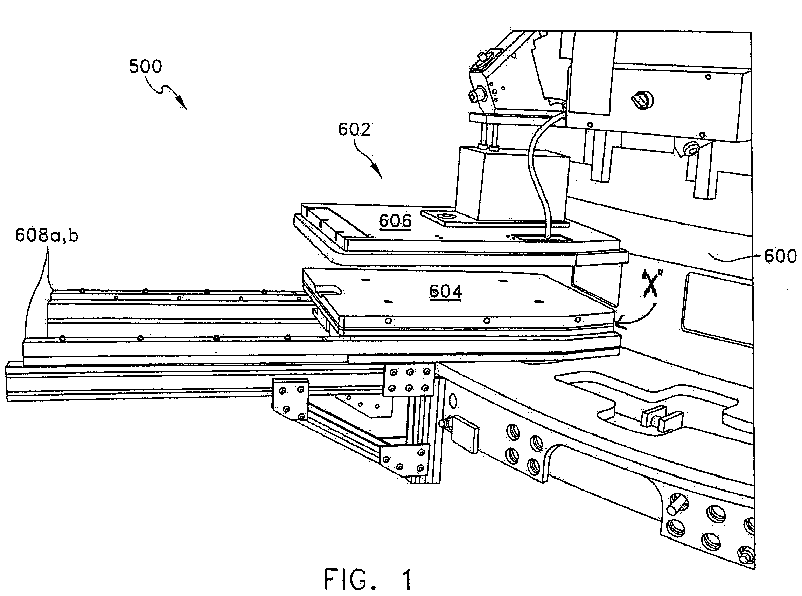

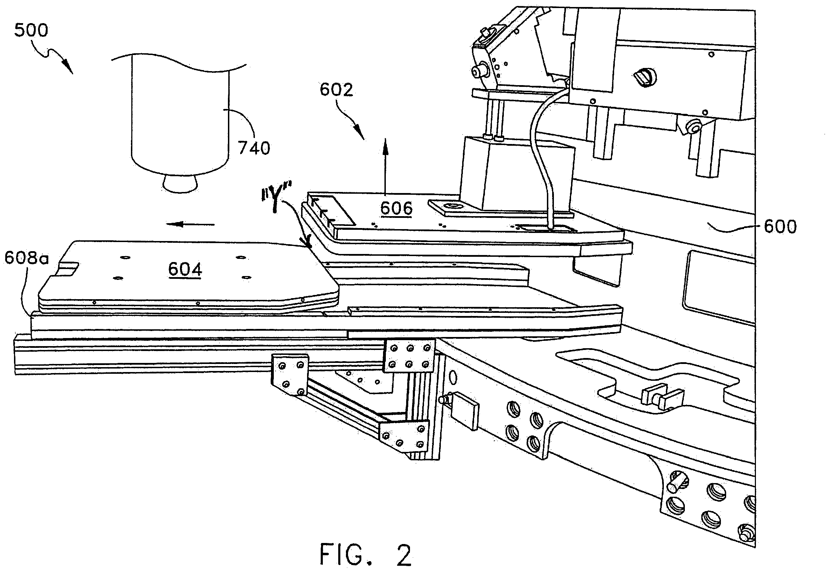

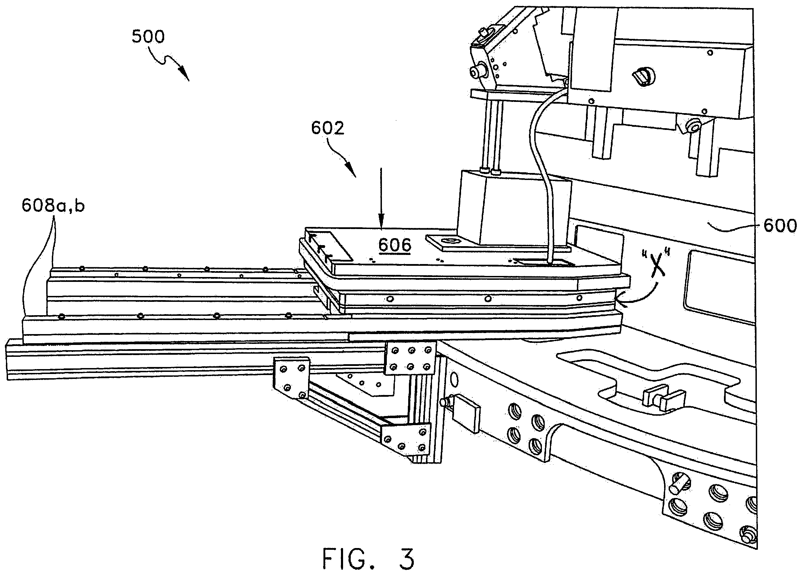

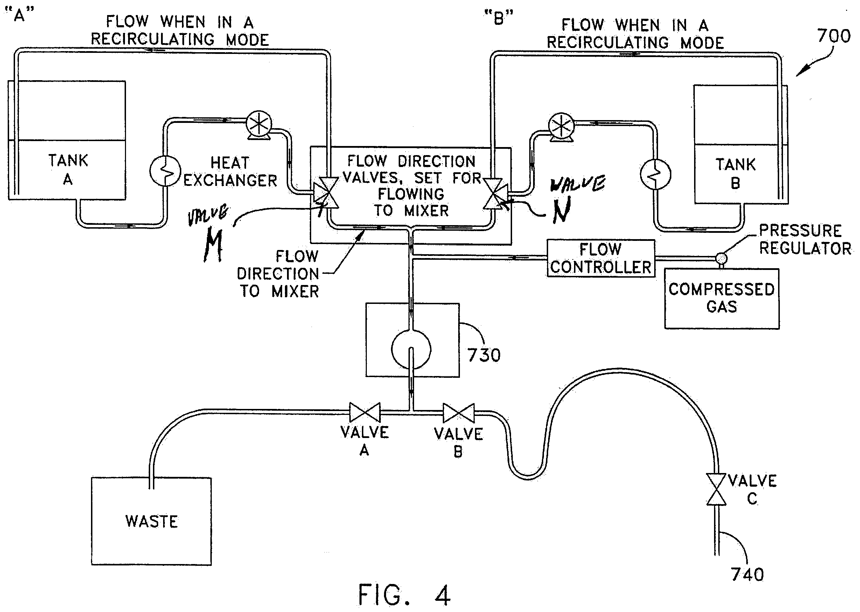

Figures 1-4, when taken together, show a partial view of a molding system 500 according to the present disclosure. Molding system 500 comprises a molding machine 600, a material mixing and dispensing system 700 (see Fig. 4) operatively associated with the molding machine 600, and one or more programmable controllers 800 that are operative to control and regulate all of the foregoing systems, and components of the foregoing systems.

In the present embodiment, molding machine 600 is a rotary molding machine comprising one or more molding stations 602, which are spaced apart from each other and from the center of the machine. Although illustrated herein as a rotary machine, it should be understood that the present system can be adapted for use with molding machines other than rotary molding machines. Each molding station 602 comprises a base plate 604 for supporting a mold base 10 and to which the mold base 10 can be connected in a variety of ways known to those of skill in the art, such as by bolts, and the like. Similarly, each molding station 602 comprises a cover plate 606 for supporting the mold cover 10a and to which the mold cover 10a can be connected, in the same manner as the mold base is connected to the base plate. The base plate 604 is supported on a pair of parallel, spaced apart sliders 608a,b which are operative to move the base plate 604, and the mold base 10 when connected to the base plate 604, from a first, starting position "X," proximate to the body of the molding machine, to one or more selected positions "Y," distal to the body of the molding machine. The movement of the base plate 604 relative to the molding machine and/or dispensing head may be controlled manually, or automatically with a programmable controller.

The material mixing and dispensing system 700 comprises two recirculating subsystems "A" and "B," which are fluidly connected to a mixing chamber 730; a dispensing head 740 is fluidly connected to the mixing chamber. The mixing chamber 730 is fluidly connected to two recirculating systems A and B, and to a source of compressed gas.

Subsystems A and B each comprise a heat exchanger and a positive displacement pump operatively connected to tanks A and B respectively, such that when valves A and B are closed, the subsystems are operative to circulate materials from the tanks in separate closed loops at regulated, preselected temperatures and flow rates.

In use, when valves M and N are closed, system 700 is operative to circulate the components of the frothed foam in closed loops at regulated temperatures and flow rates. When valves M and N are open, system 700 is operative to allow the material components to flow into the mixing chamber 730, along with compressed gas from a source of compressed gas. The material components are mixed together and with the compressed gas in the chamber 730 to form a cellular, frothed foam material formulation. The materials flow radially through a network of stationary and rotating vanes (not illustrated) disposed in the mixing chamber 730, so that the materials are mixed many times in the time it takes to flow through the mixer. Heat is removed from the mixture by a cooling water jacket (not illustrated) disposed in the mixer. The foam cell size and structure are controlled by varying the flow rates of the chemicals and compressed gas, and the rotational speed of the vanes in the mixer. When valves B and C are open, the frothed foam formulation can be dispensed from the mixing chamber to the dispensing head 740. When valves B and C are closed, and valve A is open, frothed foam formulation can be directed to waste. The operation of the various valves, heat exchangers, pumps, flow controller for the compressed gas, and position of the dispensing head relative to the base mold mounted on the base plate, all may be controlled manually, or automatically with a programmable controller.

The position of the dispensing head 740 in relation to the base plate/mold base may be controlled manually, or automatically with a programmable controller. Thus, the dispensing head 740 is operatively associated with the molding machine 600 to move and/or regulate the position of the dispensing head 740 in relation to the base plate 604 and/or mold base 10.

The individual components of the foregoing subsystem may be controlled manually, or automatically with a programmable controller.

The system facilitates a method of molding material involving selecting a suitable mold and installing the mold on the base plate and/or cover plate, by bolting the mold to the plates. After installing the mold, suitable adjustments are made to set the level of the mold base relative to the cover, to level the mold, and to set the spacing between the mold base and the mold cover. The foregoing settings are determined by various factors including, but not limited to, the type and number of products that the mold is capable of forming, the desired thickness of the product, the thickness variation in the product, the type of material being used, how the material is being introduced into the mold (i.e., by an open pour, injection, etc.), and the like.

Each of the mold base 10 and mold cover 10a comprise corresponding/mating mold surfaces, which are operatively connected to a heat source (not illustrated) and to a vacuum source (not illustrated). The operation of the heat source and vacuum source may be controlled manually, or automatically with a programmable controller. Accordingly, as an option during the molding process, a vacuum may be drawn on one or more of the corresponding/mating mold surfaces, in whole or in part, and/or the mold surfaces may be heated, in whole or in part.

After the mold has been installed, and the selected mold settings have been set, the controller may be programmed, as discussed above, to set the initial start position, the drop rate and dwell times, the amount and rate of material to be dispensed, the pattern of the material to be dispensed, whether and when to use heat and/or vacuum on the mold sections, and the like. Controlling the speed of the mold closure may be accomplished by servo controls, pneumatics, hydraulics or other methods known to those skilled in the field of motion control.

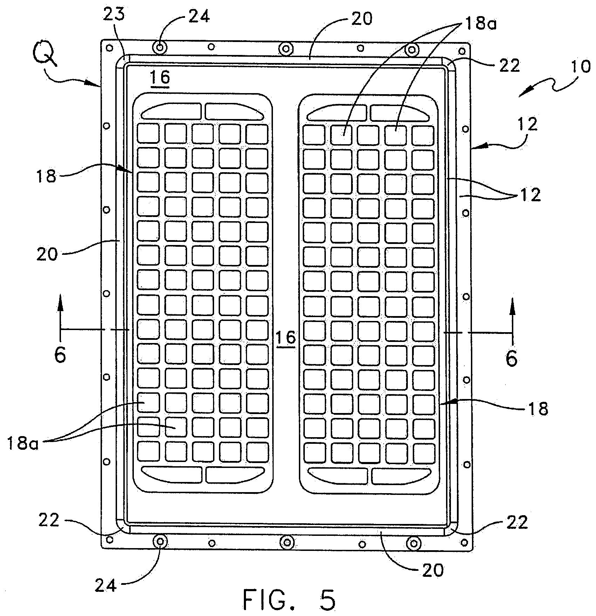

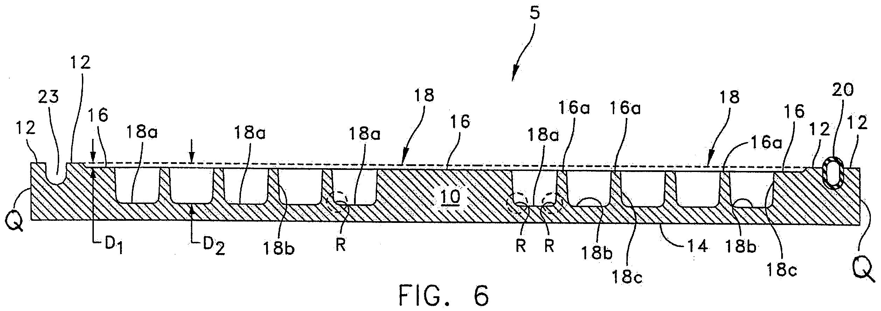

Figures 5-12, when taken together, illustrate a suitable mold 5 for the desired product. As shown, mold 5 comprises a mold base 10 and a mold cover 10a. Mold base 10 can comprise opposing upper and lower surfaces 12, 14. As shown, base mold base 10 can comprise a recessed region 16 defined in the upper surface 12 of the mold, which is recessed from the upper surface 12 by a depth "D₁". It should be understood that the terms "bottom" and "top," and/or "upper" and "lower" are used herein, unless otherwise noted, merely for convenience of description, and are not limited to any one position or spatial orientation. Also, it should be understood that the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. Further, unless defined otherwise, technical and scientific terms used herein have the same meaning as is commonly understood by one of skill in the art to which this disclosure belongs.

The present exemplary mold base 10 comprises two (2) individual mold units 18 defined in the recessed region 16, each of which corresponds to the shape and size of the desired final molded product 19, which in this instance is a rectangular strap. Although illustrated herein as a rectangular strap for the sake of convenience, it should be understood that a variety of products can be molded using the present method. Each of the two (2) individual mold units 18 comprises a plurality of cells 18a spaced apart by regions 16a. Each cell 18a comprises a base 18b and a sidewall 18c extending substantially perpendicularly to the base 18b and the upper surface 12 of the mold base 10, with a radiused edge "R" extending between the base 18b and sidewall 18c. The radiused edge "R" assists in providing impact and vibration dampening in the final product. Each of cells 18a is recessed from the upper surface 12 by a depth "D₂" which corresponds to the desired thickness of the final molded product 19. Cells 18a can comprise a variety of shapes, sizes and configurations, as desired or necessary.

Mold base 10 also can comprise a gasket recess 23 disposed between the recessed region 16 and the perimeter "Q" of the mold base 10, in which a gasket 20 can be disposed. Alternatively, although not illustrated herein, it is possible for gasket 20 to be disposed directly on the upper surface 12 of the mold base 10. Gasket 20 can provide a seal sufficient to restrict the flow of polymer from the mold base 10. Gasket 20 or mold base 10 can comprise periodic gasket openings 22 (see Fig. 1) to allow entrapped air to flow out of the mold base 10 during the molding process. Optionally, the mold base 10 can comprise one or more registration guides 24 (e.g., pins, studs, and the like).

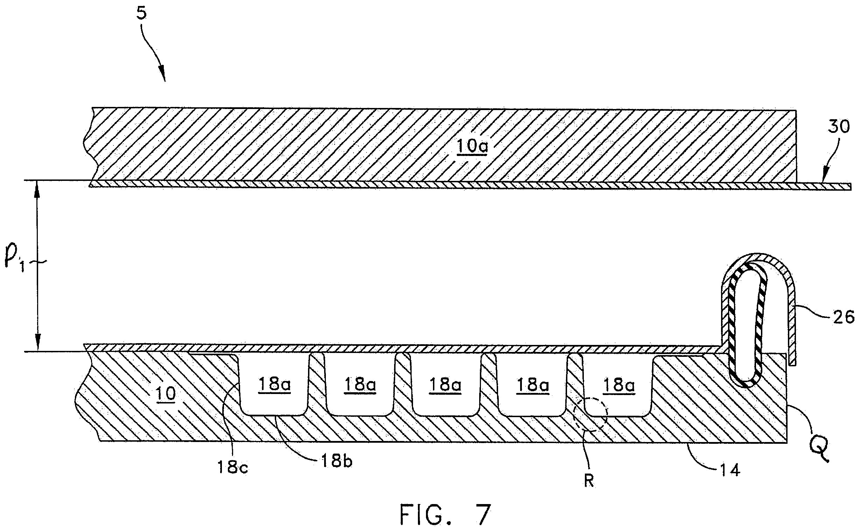

As shown in Figure 7, after selection of a suitable mold 5, the method can comprise disposing a barrier layer 26 onto the mold base 10 and across the mold cavities, such that the barrier layer 26 does not contact the mold cavities. The barrier layer 26 can be disposed onto the mold base 10 as a sheet of material in physical contact with the mold surface 12 and the gasket 20, but not in physical contact with the mold cavities (i.e., the individual cells 18a). As a result, air remains in the mold cavities during the initial stages of the molding process. The barrier layer 26 also can comprise registration guides (e.g., holes, perforations, etc., and the like) corresponding to the registration guides 24 in the mold base 10, in order to aid in its alignment to the mold base 10 and to subsequent layers. If desired, a release coating (not illustrated) may be used to assist in releasing the barrier layer 26 from the upper surface 12 of mold base 10.

Although the method is illustrated with the use of a barrier layer applied to the mold base 10, it is not necessary to do so in order to practice the method. For example, the precursor may be disposed directly onto the mold base, in the absence of the barrier layer, without using a vacuum.

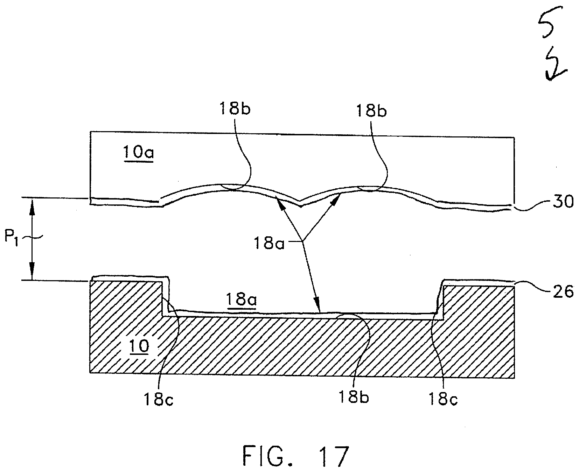

As shown in Figure 7, after dispensing the precursor 28 onto the barrier layer 26, a stabilizing layer 30 can be disposed as a sheet in contact with the surface of the mold cover 10a. Optionally, mold cover 10a can comprise mold cavities for molding more complex shapes with non-planar opposing surfaces 18b, as shown in Figure 17. If mold base 10 comprises registration guides 24, then the stabilizing layer 30 also can comprise corresponding registration guides (not illustrated) to aid in its alignment to the mold base 10 and to any subsequent layers.

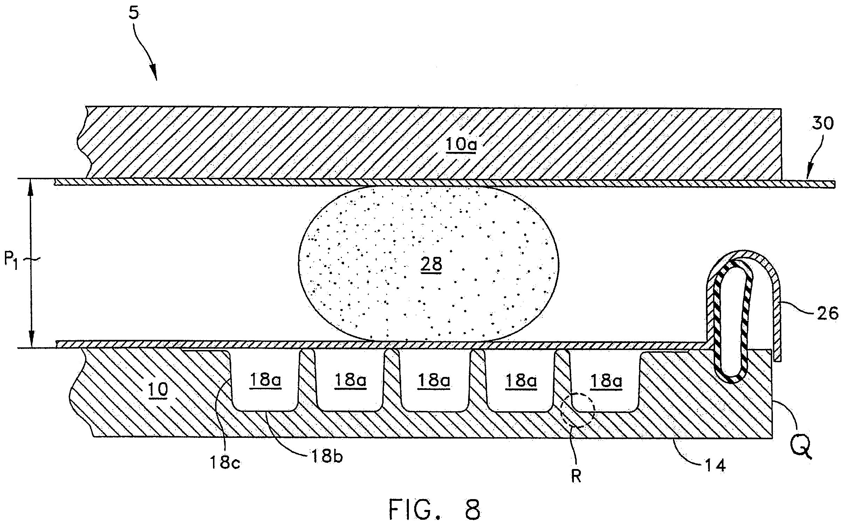

As shown in Figure 8, after disposing the barrier layer 26 onto the mold base 10 as described above, a polymeric precursor material 28 can be dispensed onto the barrier layer 26. "Polymeric precursor," as used herein, means a polymeric precursor material that has not yet polymerized to form a polymer, including polymeric materials known in the art as "frothed foam." "Frothed foam," as used herein, means mean a cellular foam product, the cells of which are formed by the mechanical incorporation of a gas (e.g., nitrogen, carbon dioxide, argon, and the like), into a curing polymer system. Frothed have been prepared from many polymer systems such as SBR latex, PVC plastisol, polyolefins, and polyurethane.

The precursor 28 can be disposed onto the barrier layer 26 using a variety of techniques such as, but not limited to, pouring, injecting, and/or the like.

Dispensing the precursor 28 can comprise pouring a sufficient amount (e.g., volume) of the precursor to fill each of the two (2) individual mold units 18. The present method can comprise dispensing the precursor 28 onto the barrier layer 26 (e.g., a single "pour") to provide a sufficient amount of precursor 28 to form all of the mold units 18 in a single molding cycle. Dispensing the precursor 28 in bulk, rather than separately, can substantially reduce the manufacturing time of the present method in comparison to other methods. Alternatively, the polymer may be shot into a partially closed mold through a runner system in the top plate of the mold. After injecting the polymer into a partially closed mold it moves to another station where the mold can be closed.

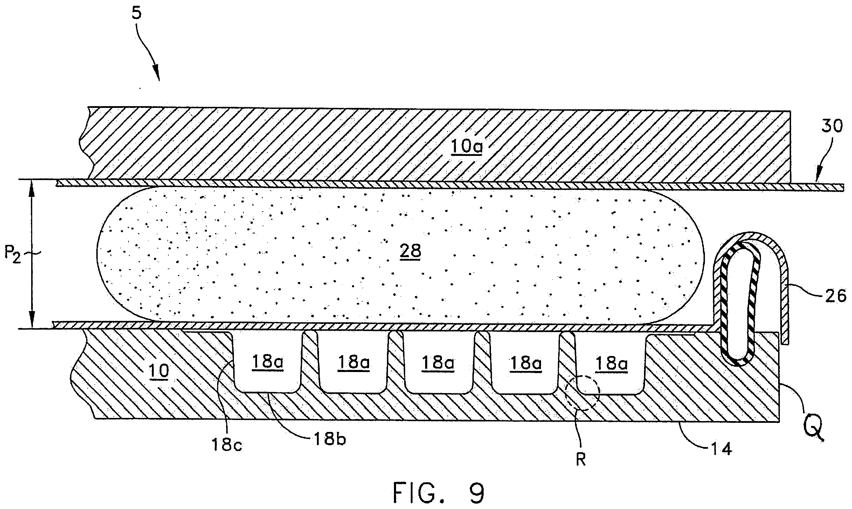

As shown in Figures 5-8, when taken together, after disposing the precursor on the barrier layer, the mold closure can be initiated from its initial open position P₁. The rate at which the mold is closed may be regulated manually or automatically by, for example, servo controls, pneumatics, hydraulics or other methods known to those of skill in the art. As the mold is closed into intermediate position P₂, the precursor 28 can flow between the barrier and stabilization layers, into all regions of the mold 5 defined by the gasket 20, as shown in Figure 9 During the initial stages of mold closure, air remains in the mold cavities 18a, and the barrier layer 26 remains substantially parallel with the mold cover 10a.

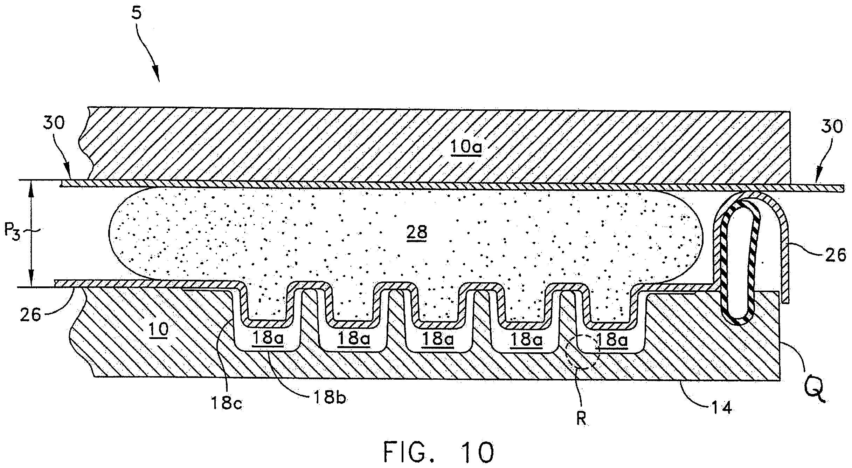

Upon further closure of the mold to intermediate position P₃, the precursor 28 can spread further between the barrier and stabilization layers, and a vacuum (e.g., about 15 to 29 in Hg (inches of mercury)) can be applied to draw the barrier layer 26 toward the surface of the mold cavities, as shown in Figure 10. However, vacuum may be applied to the bottom of the lower barrier layer at any time in this process to enable forming parts. In addition, the vacuum system may be divided into sectors to allow pulling vacuum on specific areas at different times in the process cycle.

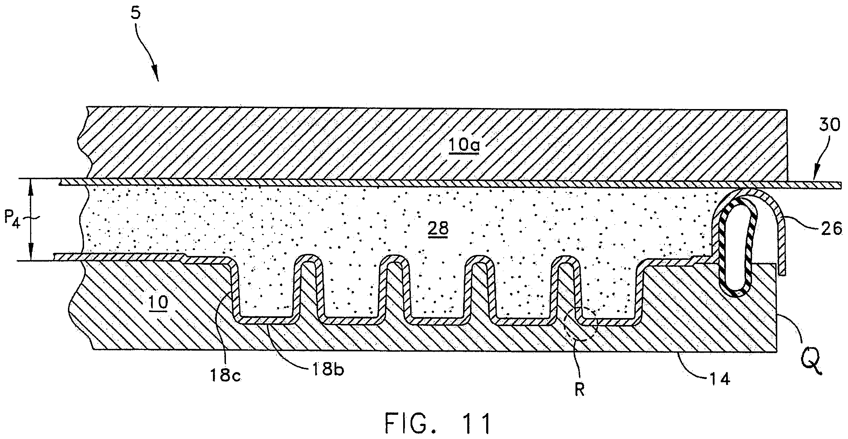

Upon further closure of the mold to intermediate position P₄, the barrier layer 26 is drawn toward and into the mold cavities, the precursor 28 is drawn into the mold cavities with the barrier layer, and the entrapped air is removed from the mold cavities, as shown in Figure 11. During this stage, the precursor remains substantially in contact with the barrier layer, thereby avoiding the formation of air pockets between the barrier layer and precursor.

Optionally, the barrier layer can be preheated before or after disposing the barrier layer onto the mold base 10, using a variety of techniques, including, but not limited to, radiant heat, thermal heat, etc. The barrier film, if present, may be heated by the thermoformer heater, and/or by the mold heaters. While it typically is advantageous to apply the vacuum after the film is heated, it may be turned on at any time after the heat is applied to it. In addition, the heat and/or vacuum can be used throughout the molding process, if desired. The mold will be in this station for the greatest of the following times, heater time or the shot time of the preceding station plus delays.

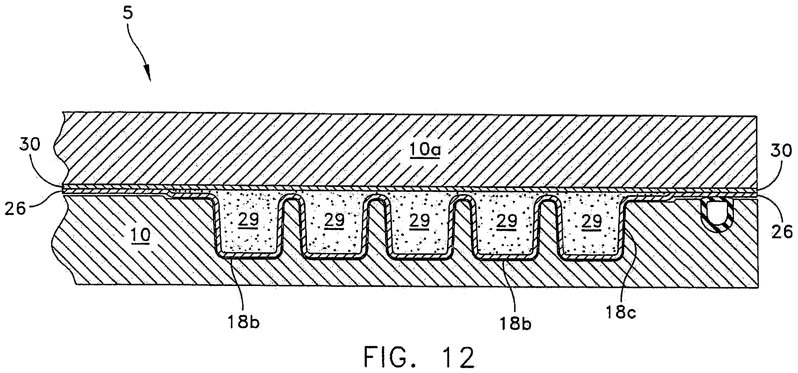

As shown in Figure 12, after the barrier layer is drawn into contact with the mold cavities, and the mold is completely closed, the precursor 28 can be allowed to polymerize to form a polymer 29 in the closed mold 5 for a predetermined period of time (e.g., 30 seconds to 5 minutes). The molding process can typically involve pressures of about 60 psi, but as noted above, if desired, additional pressure, heat, and/or a vacuum can be applied to the mold during curing for various reasons e.g., to increase the speed of processing, to improve the quality of the final material, to change the surface characteristics of the polymer, and/or the like. As a result, the overall processing time for producing a plurality of molded products 19 can be substantially reduced in comparison to other methods such as injection molding.

In addition, because the time used to dispense the precursor 28 is reduced in comparison to other methods, it is possible to increase the speed of curing by varying a number of factors such as, for example, pressure, temperature, catalyst concentration (when used), and/or the like. The use of heat, pressure and/or vacuum during the molding process can be desirable when the articles to be formed require more definition such as undercuts, and the like. When vacuum forming or thermoforming, it can be desirable to utilize molds formed at least in part from a porous composite material, which allows the formation of intricate details and surface patterns in the molded article, and eliminates the necessity for vent holes in the mold. One example of such a porous composite material is breathable aluminum, which is available commercially under the brand name METAPOR™.

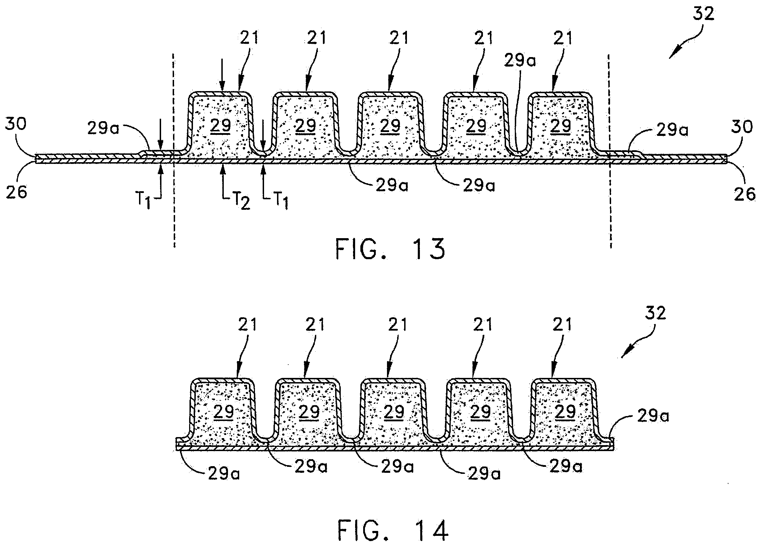

After curing, the mold 5 can be opened, and a sheet 32 (partial section shown) comprising the molded products 19 (which in this instance is a strap) can be removed from the mold base 10, as shown in Figure 13. As shown, each of the molded products 19 comprises a plurality of pillars 21. As noted above, the size, shape and configuration of the pillars can be varied. The presence of the barrier layer 26 and the stabilization layer 30 can facilitate the handling of the sheet 32 because the polymer 29 is encapsulated by the layers 26, 30, which can be advantageous when the polymer 29 has adhesive properties (such as a polymeric gel material) that would otherwise cause it to adhere to surfaces such as the mold surface, a user's hand, and the like. The sheet 32 comprises a plurality of relatively thin regions 29a disposed between and interconnecting the pillars 21. The regions 29a of polymer can comprise a thickness "T₁" corresponding to the depth D₁ of the recessed region 16 of mold base 10. In order to minimize waste, or when it is desirable for the thickness T₁ of regions 29a to be as thin as possible, the depth D₁ of the recessed region 16 can be selected to be as small as possible while still allowing unrestricted flow of the precursor 28 into the region defined by the gasket 20. Therefore, minimizing the thickness of the polymer in regions 29a can result in a thickness T₁ comprising slightly more than the combined thickness of the barrier layer and the stabilization layer, as shown in Figure 13.

The molded products 19 can be separated from the sheet 32 and from each other by cutting (e.g., die cutting, and the like) through the barrier layer 26, polymer regions 29a and stabilization layer 30. The molded products 19 can be die cut between the polymer regions 29 and 29a and/or through the polymer region 29. When the polymer 29 has adhesive properties, then it may be desirable to die cut through a portion of the polymer regions 29 adjacent to the polymer region 29a, such that the sides of the molded units 19 comprise an exposed region of polymer. Otherwise, the exposed edges of regions 29a are sufficiently thin to avoid or minimize the edges of products 19 sticking to adjacent surfaces when not desired or necessary. During die cutting, the presence of the stabilization layer 30 prevents or minimizes the polymer 29 and barrier layer 26 from shrinking, thereby substantially maintaining the dimensions of the molded products 19 in comparison to the dimension of the mold units 18. Because shrinkage of the molded products 19 can be minimized, it may not be necessary to factor shrinkage into the design of the molds, as may be necessary with other methods.

Optionally, an additional layer 34 of the same or different material can be disposed between any of the foregoing layers e.g., between the stabilization layer 30 and the polymer 29 and/or between the polymer 29 and the barrier layer 26. Also optionally, layer 34 can be disposed in the region 29 e.g., by disposing a first portion of the precursor 28 onto the barrier layer 26, disposing the layer 34 over the first portion of the precursor 28, and disposing a second portion of precursor 28 over the layer 34. Layer 34 can comprise a variety of synthetic and/or non-synthetic materials including, but not limited to, paper, fabric, plastic film, metal foil, and/or the like, as well as composites and/or combinations comprising at least one of the foregoing. When layer 34 comprises a fabric layer, the fabric can be knit, woven, non-woven, synthetic, non-synthetic, and combinations comprising at least one of the foregoing. Disposing a fabric layer as layer 34 can be advantageous because it can trap and disperse air bubbles that may otherwise form in or between the layers, resulting in a better appearance for the final molded products 19. Layer 34 also can comprise color, graphics and/or indicia, including text. The color, graphics and/or indicia disposed on layer 34 can be transmitted through other layers when they are formed from colorless and/or transparent materials, which can be desirable for aesthetic and costs reasons. In addition, if desired, layer 34 can be fluid-permeable. "Fluid-permeable," as used herein, means that the material from which layer 34 is formed is open to passage or entrance of a fluid material, such as the precursor.

Also optionally, layer 34 can be used in place of the stabilization layer 30. If layer 34 replaces stabilization layer 30, then it can be applied in the same manner described above with respect to stabilization layer 30.

In some instances, it may be desirable to be able to adhere the molded products 19 to various surfaces. Therefore, optionally, an adhesive (not illustrated) may be disposed on one or more surfaces of the final molded products 19. Also optionally, an adhesive can be disposed and/or on one or more surfaces of layers 26, 28, 30 and 34. For example, an adhesive can be disposed on surface 30b, and the adhesive can be supported by a release and/or support layer (not illustrated). Some possible adhesives can comprise pressure sensitive adhesives, thermoplastic adhesives, and the like, as well as combinations comprising at least one of the foregoing. Examples of suitable adhesives include a material available from 3M as product number 7026. In some instances, the polymer 29 may comprise sufficient adhesive strength to be adhered to a surface in the absence of a separate adhesive. In such instances, it may be desirable that the stabilizing layer 30 can be capable of manual release from the polymer 29. Therefore, optionally, the stabilizing layer 30 can comprise a release coating (not illustrated) such as silicone, disposed on surface 30a, which can assist in the manual release of the stabilizing layer 30 from the polymer 29.

A variety of materials can be used in the foregoing methods to make the foregoing molded products 19. The barrier layer 26 can comprise any material capable of providing sufficient elasticity to prevent tearing and/or stretching when a force is applied thereto; sufficient structural integrity to be formed into predetermined shapes; and that is capable of withstanding the environment in which it is intended to be used, without substantial degradation. The barrier layer 26 also can be selected to facilitate the handling of the polymer layer, which can comprise adhesive characteristics in some instances. Therefore, after molding, the barrier layer 26 can be selected to comprise a relatively non-tacky surface and a relatively smooth feel to the human touch. Some possible materials for the barrier layer 26 include polyolefins, polystyrenes, PVC, latex rubber, and thermoplastic elastomers (TPEs), and/or the like, and combinations comprising at least one of the foregoing materials. Some possible TPE materials include polyurethane, silicone, and/or the like, and combinations comprising at least one of the foregoing materials. The barrier layer 26 can comprise an elongation of about 100 percent (%) to about 1500 %, more particularly about 200% to about 1000%, and more particularly still about 300% to about 700%". It should be understood that the modifier "about" used in connection with a quantity is inclusive of the stated value and has the meaning dictated by the context (e.g., includes the degree of error associated with measurement of the particular quantity). Other possible materials for the barrier layer 26 include, but are not limited to, fabrics, paper, plastic (e.g., polyester, polyethylene, polyvinyl chloride (PVC), and the like) metal, metallized plastic, and/or the like, and combinations comprising at least one of the foregoing materials.

Barrier layer 26 can comprise any thickness capable of allowing the products to be molded without sticking to the mold. The thickness of the barrier layer 26 can be varied depending upon the application and the desired thickness for a particular application can be determined using routine experimentation by those of ordinary skill in the art. Barrier layer 26 can comprise a thickness ranging from about 0.2 milli-inch (hereinafter "mil") to about 60 mil, more particularly from about 0.5 mil to about 30 mil, and more particularly still from about 1.0 mil to about 15 mil. For example, in instances in which the hand-feel of the products is important, it has been found that this can be achieved with relatively thin barrier layers 26. Therefore, in such products it can be desirable to use the thinnest barrier layer possible without sacrificing durability. For example, for application in which a relatively thin barrier layer 26 is desirable, it can comprise a thickness ranging from about 0.2 milli-inch to about 6 mil, more particularly from about 0.5 mil to about 3 mil, and more particularly still from about 0.6 mil to about 2 mil. When the durometer of the polymerized layer 29 is such that it is tacky, the tacky material can be exposed if the barrier layer 26 is punctured, making the products difficult to handle. In such instances, it can be desirable to use a thicker barrier layer 26, which can provide increased durability in comparison to thinner barrier layers. For example, when the present materials are used in vibration dampening applications, it can be desirable for the thickness of the barrier layer 26 to be about 50 to about 60 mil. When the present products are formed using a thermoforming process, it can be desirable to use a barrier layer having a thickness of up to about ⅛ inch, and even thicker in some instances when desired or necessary. It has been found that it is possible to maintain very soft pliability for barrier layers having a thickness of as much as 6 mil or more by applying heat and/or a vacuum during the thermoforming process.

As noted above, barrier layer 26 can be applied as a sheet of material during the molding process. In the form of a sheet, and especially when the barrier layer is relatively thin, the barrier material can be very flexible and may wrinkle and/or fold very easily during handling. Therefore, the barrier layer 26 also can comprise a support layer (not illustrated), which assists in handling the material. If the barrier layer 26 comprises such a supporting layer, then the supporting layer can be disposed adjacent to the upper surface 12 of the mold base 10, with the barrier layer material facing away from the upper surface 12, which can be removed prior to die cutting, if desired or necessary.

As noted above, the precursor may be disposed directly onto the mold base, in the absence of the barrier layer. If desired, a barrier layer 26 may be applied as a coating of material during or after the molding process. If applied after the molding process, then the barrier layer can be disposed onto the precursor 28 after formation of the molded units 18, for example by painting, spraying, brushing manually, and/or the like. When the barrier layer 26 is not disposed as a sheet or is not disposed as a coating during the molding process, and then the precursor 28 can be disposed directly onto the upper surface 12 of mold base 10, which may require the use of a release agent on the upper surface 12.

The polymer 29, 29a can comprise any polymeric material comprising sufficient structural integrity to be formed into predetermined shapes, including foam polymeric materials and frothed foam polymeric materials; and that is capable of withstanding the environment in which it is intended to be used, without substantial degradation. The hardness of the material (e.g., the polymer materials) can be selected to provide articles and/or regions of articles with a predetermined hardness, which can be tailored for specific cushioning and/or wear resistance applications. The polymer 29, 29a can comprise a durometer ranging from about 30 Shore 000 to about 88 Shore D. The durometer of the polymer can be determined by those of ordinary skill in the art using tools such as durometers or penetrometers.

Examples of suitable polymeric materials include, but are not limited to, thermosetting polymeric materials, elastomeric polymeric materials, thermoplastic materials, including thermoplastic elastomeric materials, and combinations comprising at least one of the foregoing. Some possible polymeric materials include, but are not limited to, polyurethane, silicone, and/or the like, and combinations comprising at least one of the foregoing materials. Examples of other materials include, but are not limited to, composite materials, and the like. One suitable material is a polyurethane frothed foam that is commercially available under the name PORON®.

Formation of the precursor 28 can take place by a variety of methods known to those of skill in the art. For example, formation of a polyurethane gel can comprise reacting suitable pre-polymeric precursor materials e.g., reacting a polyol and an isocyanate in the presence of a catalyst. Optionally, a frothed foam may be prepared by mechanically adding a blowing agent to the reaction mixture using a frother, which is a mechanical device that injects the blowing agent into the mixture while it agitates the mixture. One example of the foregoing is the addition of air to a polyol-isocyanate mixture. Other gases can be used including, but not limited to, carbon dioxide, nitrogen, and the like, and combinations of the foregoing.

In some instances, it can be desirable for the polymer to be sufficient softness and/or pliability to provide comfort against a body. In such instances, polymer can comprise a durometer ranging from about 30 Shore 000 to less than or equal to about 70 Shore A, more particularly from about 30 Shore 000 to less than or equal to about less than 70 Shore 00, more particularly still from about 30 Shore 000 to less than or equal to about less than 60 Shore 00.

In some embodiments, it can be desirable for the polymer to have sufficient adhesive strength to adhere to a selected surface (such as the inner surface of a shoe) which can eliminate the need for a separate adhesive to adhere the molded units to a desired surface. It is possible to vary the adhesive strength of the polymer by varying, for example, the durometer of the material used to form the layer. In such instances, the polymer can comprise, for example, a polymer having a durometer of about 30 Shore 000 to about 85 Shore 00. Gel materials in such relatively low durometer ranges can comprise a jelly-like consistency. One possible material having such adhesive characteristics is a polyurethane gel comprising a durometer in the range of about 10 Shore 00 to about 70 Shore 00, which can provide sufficient adhesive strength to adhere to a desired surface, such as the surface of an inner shoe, or a rigid plastic such a polypropylene.

Again, although illustrated herein as a polymer, other materials can be used to form layers and/or regions 29, 29a such as, for example, composite materials.

The polymer 29 and/or the barrier layer 26 can comprise one or more additives such as, but not limited to, modifiers, coloring agents, stabilizers, phase changing materials, ultraviolet inhibitors, and/or active agents as well as combinations comprising at least one of the foregoing. The concentration of the additive can be varied depending on the desired effectiveness of the agent.

One possible phase changing material can comprise phase changing microspheres (available under the product name Outlast), which contain materials that can change phases at near body temperature. As a result, heat energy can be stored in the barrier layer, resulting in a product that can feel cool or warm.

Suitable additives can comprise tolnaftate, undecenoic acid, allylamines, chlorine, copper, baking soda, sodium omadine, zinc omadine, azoles, silver, and/or the like, and combinations comprising at least one of the foregoing. For example, silver can provide an antifungal/antibacterial effect. For purposes of economy and effectiveness, it has been found advantageous to include active agents, when used, in the barrier layer 26. Because the barrier layer 26 is relatively thin in comparison to the polymer 29, disposing such agents in the barrier layer 26 allows the use of reduced total amounts of the agents to achieve similar effective concentrations in comparison to thicker layers, thereby reducing costs associated with the additives. Also, disposing such agents in the barrier layer 26 ensures that the agents are disposed in the outermost layer of the article i.e., the body contacting regions, rather than in regions remote from the user, which can increase the effectiveness of the agents. One possible barrier layer 26 comprising such an active agent is Vacuflex 18411 AG, available from Omniflex, Inc.

In some instances, it may be desirable to use colorless materials for each of the barrier, polymer and stabilization layers, which can be desirable for aesthetic reasons. In another embodiment, when layer 34 is included in the structure, and the layer includes color, graphics and/or indicia, it can also be desirable to use colorless and/or transparent materials because the color, graphics and/or indicia will be visible through the layers.

The stabilizing layer 30 can comprise a material that is capable of substantially minimizing shrinkage of the barrier layer 26, precursor 28 and/or the polymer 29 during and after processing; that can provide support for the polymer 29; and that is capable of facilitating handling of the polymer 29 and the barrier layer 26. The stabilizing layer 30 can comprise any material that is substantially inelastic in comparison to the polymer 29, in order to be capable of providing dimensional stability to the sheet 32 and/or to the molded products 19 during and after processing. Some possible materials for the stabilizing layer 30 include, but are not limited to, fabrics, paper, plastic (e.g., polyester, polyethylene, polyvinyl chloride (PVC), and the like) metal, metallized plastic, and/or the like, and combinations comprising at least one of the foregoing materials. The stabilization layer 30 can comprise any thickness desired for a particular application, which can be determined by those of ordinary skill in the art. For example, in some embodiments, stabilization layer 30 can comprise a thickness ranging from about 0.2 mil to about 10 mil, more particularly from about 0.5 mil to about 5 mil, and more particularly still from about 1 mil to about 3 mil. One possible material available in the foregoing thickness ranges is oriented polyester film, which is commercially available from a variety of sources and a under variety of different product names (e.g., MYLAR®). In other embodiments, stabilization layer 30 can comprise a thickness ranging from about 1 millimeters (mm) to about 8 mm, more particularly from about 2 mm to about 6 mm, and more particularly still from about 3 mm to about 4 mm. One possible material having a thickness in the foregoing range is a polyurethane foam that is commercially available under the name PORON®.

The foregoing methods and materials can facilitate the manufacture of polymeric articles and/or regions of articles, which can be desirable for aesthetics and/or to minimize wear and/or friction. The methods can be used to form polymeric articles and/or regions of articles, comprising any size, thickness or geometry. The size, thickness, geometry, softness, and adhesive strength of the articles and/or portions of the articles can be selected to optimize the conditions for which it is designed. Examples of articles in which the foregoing polymeric materials can be useful include, but are not limited to, handles for personal care objects such as hairbrushes, toothbrushes and razors; medical devices such as masks, crutches and casts; handles for household objects such as brooms; straps for luggage, backpacks, briefcases and purses; clothing such as cycling shorts, undergarments and shoes; utility objects such as mousepads, keyboard rests; handles and/or straps for consumer goods such as bottles and/or boxes, laundry detergent handles; sporting goods equipment and accessories such as racquet grips, bat handles, fishing rod grips, guns, and bicycle handlebar grips; and the like. In addition, the articles can comprise indicia such as labels with color, text and/or graphics, and the like.

The following non-limiting examples further illustrate the various embodiments described herein.

### WORKING EXAMPLES

### EXAMPLE 1

Formation of an innersole. A metal mold defining thirty six (36) heel liners was selected for use in the Desma machine. The mold comprised a recessed region of about 0.020", and a gasket spaced apart both from the perimeter of the mold edge and from the recessed region. The dimensions of each of the 36 mold units were about 4 inches by about ½ inch, and the depth of the mold units was uniform. A TPU sheet having a thickness of 0.004" (Deerfield Urethane PS3110) was installed on a press, and stretched across the top of the mold. The TPU sheet was heated under a heater at 430° F for 14 seconds, and then a gel precursor was dispensed onto the TPU sheet. A barrier layer was then placed over the top of the gel precursor.

The mold cover closing cycle was initiated, which applied pressure to the gel precursor, so that it began to spread laterally in the mold. When the gel precursor reached the edge of the mold, a vacuum was applied to the underside of the TPU sheet, to draw it into the mold cavities, which was initiated about six (6) second after the mold closing cycle was initiated. The complete mold cover closing cycle was about ten (10) seconds. Thereafter, the part was allowed to cure, as described above.

A visual comparison was made of parts molded with the present method using vacuum at the time of closure and a relatively slower mold closure rate were made with parts made without vacuum and a relatively faster mold closure rate. Twenty (20) sheets of parts (corresponding to 140 parts) made using the present method had three (3) defective parts (defect rate of 2.1%), in comparison to a defect rate of 6.3%.

### EXAMPLE 2

Formation of a gel seat pad. A metal mold defining a single seat pad was selected for use in the Desma machine. The seat pad was 16" long, 13" wide by ¼" thick, and comprising about 190 pods. After installation on a press a sheet of 0.004" thick TPU, such as Deerfield Urethane PS3110, the TPU film was stretched across the top of the mold, and heated under a heater at 430° F for 14 seconds. A gel precursor was then dispensed onto the TPU sheet. A stabilization layer was then placed over the top of the gel precursor.

The mold cover closing cycle was initiated, which applied pressure to the gel precursor, so that it began to spread laterally in the mold. When the gel precursor reached the edge of the mold, a vacuum was applied to the underside of the TPU sheet, to draw it into the mold cavities, which was initiated about six (6) second after the mold closing cycle was initiated. The complete mold cover closing cycle was about ten (10) seconds. Thereafter, the part was allowed to cure, as described above.

### EXAMPLE 3

Formation of a Frothed Foam Elbow Pads. A metal mold defining a 4 elbow pads was selected for use in a Desma rotary molding machine, and bolted to the support plates at each molding station. Each elbow pad was 8.5" long, 6" wide by .25" thick, and comprising about 11 pods. After the mold bases were installed, a sheet of 0.004" thick TPU, such as Deerfield Urethane PS3110, was stretched across the top of the mold base at the first station, and heated to about 205° F.

In the material mixing and dispensing system, the components of a polyurethane foam (Poron XRD, available from Rogers Corporation) were circulated in subsystems A and B, and thereafter, valves M and N were opened, allowing the polyol and isocyanate to flow into mixing chamber 730, along with compressed nitrogen from the source of compressed gas. The material components were mechanically mixed together and with the compressed nitrogen to form cellular, frothed foam material formulation with a density in the range of 14 - 18 lb/ft³.

The mold base was moved outwardly from the molding machine until it was disposed underneath the dispensing head 740 (position "Y") of the material mixing and dispensing system 700. Valves B and C were opened, and a predetermined amount of the frothed foam formulation was then dispensed onto the TPU sheet from the dispensing head 740. Valves B and C were then closed, and valve A was opened, allowing the frothed foam formulation to be directed to waste, or to be recycled.

The mold base was then moved back toward the molding machine into the initial position ("X"), and a stabilization layer was then placed over the top of the frothed foam precursor. The mold cover closing cycle was initiated, which applied pressure to the frothed foam precursor, so that it began to spread laterally in the mold. When the volume of the spacing between the TPU and stabilization sheets was roughly equal to the volume of the mold cavities (i.e., when the spacing between the sheets was about 1/8 inch), a vacuum was applied to the underside of the TPU sheet, to draw it into the mold cavities, along with the frothed foam precursor. The complete mold cover closing cycle was about forty (40) seconds. Thereafter, the parts were allowed to cure, as described above. The process was repeated at each station of the Desma machine, thereby providing continuous compression molding of mechanically frothed foam parts.

The system and method of the present disclosure can comprise at least one or more of the following advantages: 1) the ability to mold mechanically frothed foam parts in a continuous process other than extrusion; 2) improved part quality as a result of a reduction in defects; 3) sheets of pods or pillars can be molded and wrapped or folded around three-dimensional objects to provide cushioning; 4) increased thickness of parts relative to cross-section; 5) control of polymer precursor flow on the mold provides the ability to mold parts that previously were impossible to mold, particularly mechanically frothed foams; and 6) the ability to mold thick pillars or pods of cushioning materials from gel or mechanically frothed foams, and other materials.

Throughout the application, it should be noted that the terms "first," "second," and the like herein do not denote any order or importance, but rather are used to distinguish one element from another, and the terms "a" and "an" herein do not denote a limitation of quantity, but rather denote the presence of at least one of the referenced items. Similarly, it is noted that the terms "bottom" and "top" are used herein, unless otherwise noted, merely for convenience of description, and are not limited to any one position or spatial orientation. In addition, the modifier "about" used in connection with a quantity is inclusive of the stated value and has the meaning dictated by the context (e.g., includes the degree of error associated with measurement of the particular quantity).

Compounds are described using standard nomenclature. For example, any position not substituted by an indicated group is understood to have its valency filled by a bond as indicated, or a hydrogen atom A dash ("-") that is not between two letters or symbols is used to indicate a point of attachment for a substituent. For example, - CHO is attached through carbon of the carbonyl group. Unless defined otherwise herein, all percentages herein mean weight percent ("wt.%"). Furthermore, all ranges disclosed herein are inclusive and combinable (e.g., ranges of "up to about 25 weight percent (wt.%), with about 5 wt.% to about 20 wt.% desired, and about 10 wt.% to about 15 wt.% more desired," are inclusive of the endpoints and all intermediate values of the ranges, e.g., "about 5 wt.% to about 25 wt.%, about 5 wt.% to about 15 wt.%", etc.). The notation "+/-10% means that the indicated measurement may be from an amount that is minus 10% to an amount that is plus 10% of the stated value.

Finally, unless defined otherwise, technical and scientific terms used herein have the same meaning as is commonly understood by one of skill in the art to which this disclosure belongs.

## Claims

1. A method of molding, comprising:
providing a mold comprising a mold cover (10a) and a mold base (10) spaced apart from each other, each of the mold base and the mold cover comprising a mating surface, the mold base comprising a mold cavity (18a);
disposing a stabilizing layer (30) on the mating surface of the mold cover;
dispensing a first portion of a polymeric precursor (28) onto the mold base;
displacing the mold cover at a first rate and for a predetermined amount of time from a first selected position to a second selected position;
displacing the mold cover at a second rate and for a predetermined amount of time from the second selected position to a third selected position; including one or more delays in the mold closing; and
allowing the precursor to polymerize in the closed mold.

2. The method of Claim 1 , wherein, in the third selected position, the mold is closed.

3. The method of Claim 1 , further comprising disposing a barrier layer onto the mating surface of the mold base prior to dispensing the polymeric precursor.

4. The method of Claim 3, further comprising heating the barrier layer before disposing the barrier layer onto the mold base.

5. The method of Claim 3, further comprising drawing a vacuum through the mold cavity to draw the barrier layer into the mold cavity.

6. The method of Claim 3, further comprising drawing a vacuum through the mold cavity after dispensing the precursor, to draw the barrier layer and the precursor into the mold cavity, substantially without defects between the barrier layer and the precursor.

7. The method of Claim 4, further comprising drawing a vacuum through the mold cavity to draw the barrier layer and the precursor toward the mold cavity while displacing the mold cover.

8. The method of Claim 5, further comprising heating the barrier layer before disposing the barrier layer onto the mold base.

9. The method of Claim 1, further comprising disposing an adhesive material between the precursor and the stabilization layer.

10. The method of Claim 1 , wherein the polymerized material is a polyurethane gel comprising a hardness ranging from about 30 Shore 000 to about 75 Shore 00.

11. The method of Claim 1 , wherein the polymerized material is a polyurethane frothed foam.

12. The method of Claim 11 , wherein the barrier layer comprises a thermoplastic elastomeric (TPE) material having thickness of about 0,1 mm.

13. The method of Claim 12, wherein the TPE comprises an active agent selected from the group consisting of silver, tolnaftate, undecenoic acid, allylamines, chlorine, copper, baking soda, sodium omadine, zinc omadine, azoles, and combinations comprising at least one of the foregoing.

14. The method of Claim 12, wherein the TPE is selected from the group comprising thermoplastic polyurethane (TPU), silicone, and combinations comprising at least one of the foregoing.

15. The method of Claim 1 , wherein the mold cover comprises a mold cavity.

## Patentansprüche

1. Formverfahren, umfassend:
Bereitstellen einer Form, die einen Formdeckel (10a) und einen Formboden (10) umfasst, welche voneinander beabstandet sind, wobei jeder aus dem Formboden und dem Formdeckel eine Passfläche umfasst, wobei der Formboden einen Formhohlraum (18a) umfasst;
Anordnen einer Stabilisierungsschicht (30) auf der Passfläche des Formdeckels;
Aufbringen eines ersten Teils eines polymeren Vorläufers (28) auf den Formboden;
Verlagern des Formdeckels mit einer ersten Geschwindigkeit und über eine vorbestimmte Zeitspanne von einer ersten ausgewählten Stellung zu einer zweiten ausgewählten Stellung;
Verlagern des Formdeckels mit einer zweiten Geschwindigkeit und über eine vorbestimmte Zeitspanne von der zweiten ausgewählten Stellung zu einer dritten ausgewählten Stellung; einschließlich einer oder mehreren Verzögerungen beim Schließen der Form; und
Polymerisierenlassen des Vorläufers in der geschlossenen Form.

2. Verfahren nach Anspruch 1, wobei die Form in der dritten ausgewählten Stellung geschlossen ist.

3. Verfahren nach Anspruch 1, weiter das Anordnen einer Barriereschicht auf der Passfläche des Formbodens vor dem Aufbringen des polymeren Vorläufers umfassend.

4. Verfahren nach Anspruch 3, weiter das Erhitzen der Barriereschicht vor dem Anordnen der Barriereschicht auf dem Formboden umfassend.

5. Verfahren nach Anspruch 3, weiter das Ziehen eines Vakuums durch den Formhohlraum umfassend, um die Barriereschicht in den Formhohlraum zu ziehen.

6. Verfahren nach Anspruch 3, weiter das Ziehen eines Vakuums durch den Formhohlraum nach Aufbringen des Vorläufers umfassend, um die Barriereschicht und den Vorläufer im Wesentlichen ohne Mängel zwischen der Barriereschicht und dem Vorläufer in den Formhohlraum zu ziehen.

7. Verfahren nach Anspruch 4, weiter das Ziehen eines Vakuums durch den Formhohlraum umfassend, um die Barriereschicht und den Vorläufer während des Verlagerns des Formdeckels zum Formhohlraum zu ziehen.

8. Verfahren nach Anspruch 5, weiter das Erhitzen der Barriereschicht vor dem Anordnen der Barriereschicht auf dem Formboden.

9. Verfahren nach Anspruch 1, weiter das Anordnen eines klebenden Materials zwischen dem Vorläufer und der Stabilisierungsschicht umfassend.

10. Verfahren nach Anspruch 1, wobei das polymerisierte Material ein Polyurethangel ist, das eine Härte im Bereich von etwa 30 Shore 000 bis etwa 75 Shore 00 umfasst.

11. Verfahren nach Anspruch 1, wobei das polymerisierte Material ein geschäumter Polyurethanschaum ist.

12. Verfahren nach Anspruch 11, wobei die Barriereschicht ein thermoplastisches elastomeres (TPE) Material umfasst, das eine Dicke von etwa 0,004" aufweist.

13. Verfahren nach Anspruch 12, wobei das TPE ein aktives Mittel umfasst, ausgewählt aus der Gruppe bestehend aus Silber, Tolnaftat, Undecensäure, Allylaminen, Chlor, Kupfer, Natriumhydrogencarbonat, Natriumomadin, Zinkomadin, Azolen und Kombinationen, die mindestens eines der vorstehend Genannten umfassen.

14. Verfahren nach Anspruch 12, wobei das TPE ausgewählt ist aus der Gruppe, die thermoplastisches Polyurethan (TPU), Silikon und Kombinationen umfasst, welche mindestens eines der vorstehend Genannten umfassen.

15. Verfahren nach Anspruch 1, wobei der Formdeckel einen Formhohlraum umfasst.

## Revendications

1. Procédé de moulage comprenant :
fournir un moule comprenant un couvercle de moule (10a) et une base de moule (10) espacés l'un de l'autre, chacun parmi la base de moule et le couvercle de moule comprenant une surface d'assemblage, la base de moule comprenant une cavité de moule (18a) ;
disposer une couche de stabilisation (30) sur la surface d'assemblage du couvercle de moule ;
dispenser une première partie d'un précurseur polymérique (28) sur la base de moule ;
déplacer le couvercle de moule à une première vitesse et pendant une durée prédéterminée d'une première position sélectionnée à une deuxième position sélectionnée ;
déplacer le couvercle de moule à une seconde vitesse et pendant une durée prédéterminée de la deuxième position sélectionnée à une troisième position sélectionnée ;
inclure un ou plusieurs retards dans la fermeture de moule ; et
permettre au précurseur de polymériser dans le moule fermé.

2. Procédé selon la revendication 1, dans lequel, dans la troisième position sélectionnée, le moule est fermé.

3. Procédé selon la revendication 1, comprenant en outre la disposition d'une couche barrière sur la surface d'assemblage de la base de moule avant de dispenser le précurseur polymérique.

4. Procédé selon la revendication 3, comprenant en outre le chauffage de la couche barrière avant de disposer la couche barrière sur la base de moule.

5. Procédé selon la revendication 3, comprenant en outre l'étape de création d'un vide dans la cavité de moule pour attirer la couche barrière dans la cavité de moule.

6. Procédé selon la revendication 3, comprenant en outre la création d'un vide dans la cavité de moule après avoir dispensé le précurseur, pour attirer la couche barrière et le précurseur dans la cavité de moule, sensiblement sans défauts entre la couche barrière et le précurseur.

7. Procédé selon la revendication 4, comprenant en outre la création d'un vide dans la cavité de moule pour attirer la couche barrière et le précurseur vers la cavité du moule tout en déplaçant le couvercle de moule.

8. Procédé selon la revendication 5, comprenant le chauffage de la couche barrière avant de la déposer sur la base de moule.

9. Procédé selon la revendication 1, comprenant en outre la disposition d'un matériau adhésif entre le précurseur et la couche de stabilisation.

10. Procédé selon la revendication 1, dans lequel le matériau polymérisé est un gel de polyuréthane comprenant une dureté allant d'environ 30 de dureté Shore OOO à environ 75 de dureté Shore OO.

11. Procédé selon la revendication 1, dans lequel le matériau polymérisé est une mousse expansée de polyuréthane.

12. Procédé selon la revendication 11, dans lequel la couche barrière comprend un matériau élastomère thermoplastique (TPE) ayant une épaisseur d'environ 0,004".

13. Procédé selon la revendication 12, dans lequel le TPE comprend un agent actif choisi dans le groupe comprenant l'argent, le tolnaftate, l'acide undécénoïque, les allylamines, le chlore, le cuivre, le bicarbonate de soude, l'omadine sodique, l'omadine de zinc, les azoles et des combinaisons comprenant au moins l'un de ceux-ci.

14. Procédé selon la revendication 12, dans lequel le TPE est choisi dans le groupe comprenant le polyuréthanne thermoplastique (TPU), le silicone et les combinaisons comprenant au moins l'un de ceux-ci.

15. Procédé selon la revendication 1, dans lequel le couvercle de moule comprend une cavité de moule.
